# EUROPEAN PATENT SPECIFICATION

(11) **EP 4 168 256 B1**
(45) Date of publication and mention of the grant of the patent: **22.05.2024**
(21) Application number: 21732130.6
(22) Date of filing: 14.06.2021
(51) Int. Cl.: B60C 5/14, B60C 9/00, B60C 17/00, B60C 9/08, D02G 3/48

(54) **TYRE FOR VEHICLE WHEELS**
REIFEN FÜR FAHRZEUGRÄDER
PNEU FOR ROUE DE VEHICULE

(30) Priority: 17.06.2020 IT 202000014512
(43) Date of publication of application: 26.04.2023
(73) Proprietor: Pirelli Tyre S.p.A., 20126 Milano (IT)
(72) Inventor: AGRESTI, Simone, 20126 Milano (IT); DAGHINI, Guido Luigi, 20126 Milano (IT); CAMOSI, Luca, 20126 Milano (IT); MIAZZO, Davide, 20126 Milano (IT)
(74) Representative: Porta & Consulenti Associati S.p.A.
(86) International application number: PCT/IB2021/055206
(87) International publication number: WO 2021/255615

(56) References cited:
- EP-A1- 2 233 318
- EP-A1- 3 441 237
- WO-A2-2020/128943
- US-A1- 2015 239 301

## Description

The present invention relates to a tyre for vehicle wheels.

The tyre of the invention is, preferably, a tyre for wheels of high and ultra-high-performance sports automobiles, even electric automobiles.

Tyres for wheels of high and ultra-high-performance sports automobiles, commonly defined as "HP" or "UHP" tyres, are in particular those that allow speeds of over 190 km/h, up to more than 300 km/h, to be reached. Examples of such tyres are those carrying speed codes "T", "U", "H", "V", "Z","W", "Y", according to the E.T.R.T.O. (European Tyre and Rim Technical Organization) standard and racing tyres, in particular for high-powered four-wheeled vehicles. Typically, tyres that carry the aforementioned speed codes have a section width equal to or greater than 185 mm, preferably comprised between 195 mm and 385 mm, more preferably comprised between 195 mm and 355 mm. Such tyres are preferably mounted on rims having fitting diameters equal to or greater than 13 inches, preferably not greater than 24 inches, more preferably comprises between 16 inches and 23 inches.

The tyre of the invention can be a standard tyre or a self-supporting tyre as defined below in this description.

The tyre of the invention comprises hybrid reinforcing cords as defined below in this description.

### PRIOR ART

Tyres with reinforcing cords comprising a core made of textile material and, around the core, a winding of one or more textile filaments made of a material different from that of the core are described, for example, in US 7222481 B2, EP 3196343 A1, US 4343343 A1, EP 329590 A1.

US 2015/239301 A1, EP 2233318 A1, EP 3 441 237 B1 describe reinforcing cords comprising textile filaments of a first material twisted together with textile filaments of a second material.

### SUMMARY OF THE INVENTION

Throughout the present description and in the subsequent claims, when reference is made to certain values of certain angles, they are deemed to be absolute values, i.e. both positive values and negative values with respect to a reference plane or direction, unless specified otherwise.

Furthermore, when reference is made to any range of values comprised between a minimum value and a maximum value, the aforementioned minimum and maximum values are deemed to be included in the aforementioned range, unless expressly specified to the contrary.

Furthermore, all of the ranges include any combination of maximum and minimum values described and include any intermediate range, even if not expressly described specifically.

Any numerical value is deemed to be preceded by the term "about" to also indicate any numerical value that slightly differs from that described, for example to take into account the dimensional tolerances typical of the field of reference.

The following definitions will apply hereinafter.

The term "self-supporting tyre" is used to indicate a tyre that differs from a standard tyre in that it is capable of supporting the load of the automobile under a considerable or total loss of pressure, for example due to a puncture, thus allowing the driver to travel for a certain distance to reach a repair shop without having to stop in order to change the tyre in a potentially dangerous situation.

The term "equatorial plane" of the tyre is used to indicate a plane perpendicular to the rotation axis of the tyre and that divides the tyre into two symmetrically equal parts.

The terms "radial" and "axial" and the expressions "radially inner/outer" and "axially inner/outer" are used with reference to a direction substantially parallel to the equatorial plane of the tyre and to a direction substantially perpendicular to the equatorial plane of the tyre, respectively, i.e. to a direction substantially perpendicular to the rotation axis of the tyre and to a direction substantially parallel to the rotation axis of the tyre, respectively.

The terms "circumferential" and "circumferentially" are used with reference to the direction of the annular extension of the tyre, i.e. to the rolling direction of the tyre, which corresponds to a direction lying on a plane coinciding with or substantially parallel to the equatorial plane of the tyre.

The term "substantially axial direction" is used to indicate a direction inclined, with respect to the equatorial plane of the tyre, by an angle comprised between 70° and 90°.

The term "substantially circumferential direction" is used to indicate a direction oriented, with respect to the equatorial plane of the tyre, at an angle comprised between 0° and 10°.

The term "elastomeric material" or "elastomer" is used to indicate a material comprising a vulcanizable natural or synthetic polymer and a reinforcing filler, in which such a material, at room temperature and after having been subjected to vulcanization, can have deformations caused by a force and is capable of quickly and energetically recovering the substantially original shape and dimensions after the elimination of the deforming force (according to the definitions of standard ASTM D1566-11 Standard Terminology Relating To Rubber).

The expression "reinforcing cord", or more simply "cord" is used to indicate an element consisting of one or more elongated elements (also identified as "wires" or "yarns") optionally coated with, or embedded in, a matrix of elastomeric material.

Hereinafter, the expression "wire" will be used to refer to single elongated element made of metallic material or to a single elongated element consisting of a single textile filament (in such a case the expression "monofilament textile wire" will also be used), whereas the expression "yarn" will be used to refer to an elongated element consisting of the aggregation of a plurality of textile filaments (in such a case the expression "multifilament textile yarn" will also be used).

Each filament can also be called "fiber".

The yarns can have one or more "ends", where the term "end" is used to indicate a bundle of filaments twisted together. Preferably, a single end or at least two ends twisted together is/are provided.

The term "linear density" or "count" of a cord or of a wire/yarn/end is used to indicate the weight of the cord or of the wire/yarn/end per unit length of cord/wire/yarn/end. The linear density can be measured in dtex (grammes per 10 km of length). For the measurement of the linear density reference is made to flat wires/yarns, without twists applied in the testing step or in the twisting step, according to the tests regulated by BISFA. For example, reference should be made to:
for aramid fibers (AR):
   - Testing methods for para-aramid fibre yarns, 2002 Edition,
      - Determination of the linear density - Chapter 6
      - Determination of the tensile properties - Chapter 7 - Test procedure - Paragraph 7.5 - with procedure with initial pre tensioning;
for lyocell fibers:
   - Determination of the linear density - Chapter 6
   - Testing methods for viscose, cupro, acetate, triacetate and lyocell filament yarns - 2007 Edition, Determination of tensile properties - Chapter 7 - Tensile test conditions: oven dry test - Table 7.1 - Test procedure - Paragraph 7.5 - With oven dry test on relaxed samples - Subparagraph 7.5.2.4.

The textile reinforcing cords can be identified with a symbol that represents the textile material, the count of the fiber used and the number of ends forming the reinforcing cord. For example, a reinforcing cord with pieces made of Aramid (aromatic polyamide) identified as Ar1672 indicates a cord comprising aramid fibers with count 1670 dtex, formed of two ends twisted together.

The term "strand" is used to indicate the union of at least two wires or yarns to constitute an elongated element intended to be twisted with at least another elongated element to form the reinforcing cord, the two strands that form the reinforcing cord being equal to each other or different from one another.

The expression "hybrid reinforcing cord" is used to indicate a reinforcing cord comprising at least one monofilament textile wire and at least one multifilament textile yarn, the wire and the yarn being made of the same textile material or of different textile materials.

The term "diameter" of a reinforcing cord, or of a wire or yarn, is used to indicate the diameter measured as prescribed by the method BISFA E10 (The International Bureau For The Standardization Of Man-Made Fibres, Internationally Agreed Methods For Testing Steel Tyre Cords, 1995 edition).

In the case of yarns, the term "diameter" of a yarn is used to indicate the diameter of an ideal circumference that circumscribes all of the filaments defining the yarn.

The terms "left-handed" and "right-handed" are used to indicate the twisting direction of a reinforcing cord, or of its wires, or yarns, or ends, when the reinforcing cord is oriented vertically and the inclination of the various turns, and/or the portions of cord/wire/yarn/end that connect the various turns of the spiral defined by the cord/wire/yarn/end, are observed. The twisting direction is left-handed when the aforementioned turns and/or portions are inclined like in a S, whereas the twisting direction is right-handed when the aforementioned turns and/or portions are inclined like in a Z. The left-handed twisting direction is therefore also briefly indicated with "S" and the right-handed one with "Z".

The term "number of twists" is used to indicate the number of twists applied to a reinforcing cord, or to its wires, or yarns, or ends, per unit length of cord/wire/yarn/end. The number of twists is indicated with TPI (twists per inch) and therefore indicates the number of twists in one inch of cord/wire/yarn/end. In the case of wires, yarns or ends that must be twisted, the twisting is applied before the cord is made.

Expressions of the type (48x48), and in general (nxn), are used to indicate, with the first number, the twists imparted to the yarn/end and with the second number the twists imparted to the reinforcing cord obtained by twisting together many yarns/ends. Such twists are expressed in twists per decimetre (dm). The possible presence of the symbol "Z" and "S" beside each of the aforementioned numbers indicates the direction of the imparted twists.

The terms "breaking load" and "elongation at break" of a reinforcing cord are used to indicate, respectively, the load and the percentage elongation at which the reinforcing cord breaks, evaluated with method BISFA E6 (The International Bureau For The Standardization Of Man-Made Fibres, Internationally Agreed Methods For Testing Steel Tyre Cords, 1995 edition).

The term "part load elongation" of a reinforcing cord is used to indicate the difference between the percentage elongation obtained by subjecting the reinforcing cord to a traction of 50 N and the percentage elongation obtained by subjecting the reinforcing cord to a traction of 2.5 N. The part load elongation is evaluated with method BISFA E7 (The International Bureau For The Standardization Of Man-Made Fibres, Internationally Agreed Methods For Testing Steel Tyre Cords, 1995 edition).

The term "rigidity" of a reinforcing cord is used to indicate the bending resistant moment with predetermined angle (normally 15°) evaluated with method BISFA E8 (The International Bureau For The Standardization Of Man-Made Fibres, Internationally Agreed Methods For Testing Steel Tyre Cords, 1995 edition).

The term "modulus" is used to indicate the ratio between load (or force) and elongation measured at any point of a load-elongation curve according to the BISFA standard. Such a curve is traced by calculating the first derivative of the load-elongation function that defines the aforementioned curve, normalized to the linear density expressed in Tex. The modulus is therefore expressed in cN/Tex or Mpa. In a load-elongation graph, the modulus is identified by the slope of the aforementioned curve with respect to the X-axis.

In the context of the present invention, the term "high modulus" is used to indicate a modulus greater than 5 Mpa, whereas the term "low modulus" is used to indicate a modulus lower than 5 Mpa.

The term "radial carcass structure" is used to indicate a carcass structure comprising a plurality of reinforcing cords, each of which is oriented along a substantially axial direction. Such reinforcing cords can be incorporated in a single carcass ply (in this case the tyres are also indicated as "mono-ply") or in many carcass plies (preferably two) radially juxtaposed with respect to one another (in the case of tyres comprising two carcass plies such tyres are also indicated as "two-ply").

The term "crossed belt structure" is used to indicate a belt structure comprising a first belt layer including reinforcing cords which are substantially parallel to one another and inclined with respect to the equatorial plane of the tyre by a predetermined angle comprised between 15° and 45° and at least one second belt layer arranged in a radially outer position with respect to the first belt layer and including reinforcing cords which are substantially parallel to one another but oriented, with respect to the equatorial plane of the tyre, with an inclination opposite to the one of the reinforcing cords of the first layer.

The term "zero degrees belt layer" is used to indicate a reinforcing layer comprising at least one reinforcing cord wound on the belt structure according to a substantially circumferential winding direction.

The term "thread count" of a layer is used to indicate the number of reinforcing cords per unit length which are provided in a layer of elastomeric material, like for example a carcass ply or a belt layer. The thread count can be measured in cords/dm (number of cords per decimetre).

Tyres for high performance (HP) and ultra-high performance (UHP) sports automobiles, electric and non-electric, need a high capability to adhere to the ground, so as to be able to effectively discharge to the ground the high drive torque which they are subjected to and, thus, achieve a high thrust and an effective braking force. Such tyres must also provide for an adequate response to the various stresses which the tyre is subjected to during travel in a straight line and during cornering.

The aforementioned tyres typically comprise a radial carcass structure extending between opposite bead structures, an air tightness layer of elastomeric material (also called "liner") arranged in a radially inner position with respect to the carcass structure, a crossed belt structure arranged in a radially outer position with respect to the carcass structure, a zero degrees reinforcing layer arranged in a radially outer position with respect to the crossed belt structure, a tread band arranged in a radially outer position with respect to the zero degrees reinforcing layer and a pair of sidewalls arranged on opposite sides with respect to the carcass structure and in an axially outer position with respect to the bead structures, each sidewall comprising a layer of elastomeric material extending radially between a respective bead structure and a respective axially outer portion of the tread band.

The carcass structure is configured to provide the tyre with the desired characteristics of integrity and structural strength.

The belt structure, in addition to contribute to provide the aforementioned characteristics of integrity and structural strength, is configured to transfer to the carcass structure the lateral and longitudinal stresses which the tyre is subjected to in travel upon contact with the road surface, so as to provide the tyre with the desired performance characteristics (i.e. grip, driving stability, controllability, directionality, roadholding) and comfort.

The zero degrees reinforcing layer is configured to limit the radial deformation of the belt structure.

The sidewall is configured to protect the carcass structure from atmospheric agents and lateral impacts (for example against sidewalk edges). In self-supporting tyres, the sidewall is also configured to provide the tyre with a sufficient strength to adequately sustain the load of the automobile when the tyre is used in a deflated state and with favourable features of comfort and resistance to rolling when on the other hand the tyre is in operating conditions under normal inflation. For this purpose, a reinforcing insert made of elastomeric material is arranged in an axially outer position with respect to the liner and in an axially inner position with respect to the sidewall to define a sidewall structure configured to adequately support the tyre in a deflated state, thus preventing the yielding or swelling of the sidewall on itself, without compromising the normal travel conditions.

Considering the general trend to reduce emissions of CO₂ into the atmosphere, the Applicant has considered the problem of reducing the rolling resistance of its tyres, standard and self-supporting, including those for high and ultra-high performance sports automobiles, electric and non-electric.

With particular reference to tyres for electric automobiles, the Applicant has also observed that a reduction of the rolling resistance would result in an advantageous increase in autonomy of the batteries specifically provided for the propulsion of the automobiles.

The Applicant has observed that, the other conditions being the same, it is possible to reduce the rolling resistance of a tyre by increasing the rigidity of its carcass structure and reducing the hysteresis caused by an excessive deformability of the tyre.

The Applicant has therefore thought to use in the carcass structure of its standard or self-supporting tyres, for high performance (HP) and ultra-high performance (UHP) sports automobiles, both electric and non-electric, textile reinforcing cords having a construction suitable for achieving both the desired functionality in terms of integrity and structural strength and the desired rigidity and reduction of hysteresis.

The Applicant has observed that just only depending on the type of elongated elements used in the textile reinforcing cord (monofilament textile wires, multifilament textile yarns and/or possible combination of one or more of the aforementioned wires with one or more of the aforementioned yarns) it is possible to make a plurality of hybrid reinforcing cords having characteristics such as to achieve the aforementioned purposes, thus being theoretically suitable for being used in the carcass structure of the aforementioned tyres for sports automobiles, both electric and non-electric.

In particular, the Applicant has observed that, the material and diameter being the same, monofilament textile wires are more suitable than multifilament textile yarns for withstanding possible compression stresses and for reducing hysteresis, whereas multifilament textile yarns are more suitable than monofilament textile wires for withstanding the bending stresses which the reinforcing cords of the carcass structure are typically subjected to and for adhering to the surrounding elastomeric material.

The Applicant has considered that in the carcass structures of tyres for any type of vehicle it is necessary to ensure a good adhesion of the reinforcing cords with the surrounding elastomeric material. This would lead to the use of reinforcing cords comprising multifilament textile yarns.

However, the Applicant has considered that in order to reduce the hysteresis and also provide the aforementioned reinforcing cords with the desired resistance to possible compression stresses which the reinforcing cords could be subjected to, monofilament textile wires are most suitable, as stated above.

Solving this contradiction, the Applicant has found that a hybrid reinforcing cord made by twisting together at least two strands made of textile material, wherein each of the aforementioned strands comprises at least one multifilament textile yarn and a monofilament textile wire arranged so that, in all the cross sections of the reinforcing cord, the monofilament textile wire is at least partially embedded or incorporated in the filaments of at least one multifilament textile yarn, has excellent capability of adhesion to the surrounding elastomeric material, excellent resistance to fatigue and an excellent compromise both in terms of resistance to bending and compression and in terms of hysteresis.

Furthermore, thanks to the aforementioned embedding, the hybrid reinforcing cord has a substantially isostatic behaviour when subjected to a compression stress, i.e. all of the components of the reinforcing cord (monofilament textile wires and filaments of the multifilament textile yarns) are stressed substantially in the same way.

With particular reference to adhesion, according to the Applicant, the even only partial embedding of the monofilament textile wire in the filaments of the multifilament textile yarn ensures that in every cross section of the reinforcing cord at least one sufficiently large portion of the outer surface of the reinforcing cord is defined by the filaments of the multifilament textile yarn and, therefore, is provided with an excellent capability of adhesion to the surrounding elastomeric material. The larger the portion of monofilament textile wire that, in any cross section of the hybrid reinforcing cord, is embedded in the multifilament textile yarn, the greater such adhesion will be.

The Applicant has also considered the material on which the monofilament textile wire and the filaments of the multifilament textile yarn of the carcass structure should be made in order to provide the tyre with the desired rigidity, structural strength/integrity and reduction of hysteresis and has deemed it appropriate to use polyester fibres for the monofilament textile wire and aramid and/or polyester and/or rayon fibres for the filaments of the multifilament textile yarn.

The Applicant has indeed observed that polyester fibres are particularly cost-effective and it is therefore particularly advantageous to make both the monofilament textile wire and the multifilament textile yarn with such fibres. The Applicant has also observed that, as to the multifilament textile yarn, it is possible to use aramid fibres, which are particularly suitable for providing the carcass structure with a high modulus, and rayon fibres, which are also particularly cost-effective.

According to the Applicant, for the multifilament textile yarn it is thus possible to use polyester or rayon fibres in those cases in which it is preferred to prioritize saving money and aramid fibres in those cases in which it is preferred to prioritize the modulus. The use of polyester or rayon fibres in place of aramid fibres may also be advantageous to overcome possible periodic difficulties in retrieving the latter given their massive use in military applications.

The present invention therefore relates to a tyre for vehicle wheels according to claim 1.

The use of such hybrid reinforcing cord allows making a carcass structure suitable for providing the tyre with the desired rigidity and reduction of hysteresis (and therefore with the desired reduction of rolling resistance) and structural strength/integrity, at the same time ensuring an adequate adhesion of the reinforcing cord to the surrounding elastomeric material (thanks to the fact that, since the monofilament textile wire is always at least partially embedded or incorporated in the filaments of the multifilament textile yarn, the outer surface of the reinforcing cord is mainly defined by the filaments of the multifilament textile yarn) and achieving the benefits discussed above in terms of resistance to the various stresses which the carcass structure is subjected to.

Furthermore, the provision of two strands of the type described above, twisted together, allows improving the resistance to fatigue of the reinforcing cord while keeping the benefits discussed above.

The present invention can have at least one of the preferred features described below.

Preferably, in any cross section of the hybrid reinforcing cord, at least 50% of the outer surface of the monofilament textile wire is arranged between, or embedded in, the filaments of said at least one multifilament textile yarn. In this way, the possible portion of outer surface of the monofilament textile wire that, in each cross section of the hybrid cord, would be directly exposed to the surrounding elastomeric material would have an extension such as not to compromise an excellent adhesion of the hybrid reinforcing cord with the surrounding elastomeric material.

Preferably, the hybrid reinforcing cord comprises at least one portion at which, in any cross section of the hybrid reinforcing cord, said at least one monofilament textile wire is completely embedded in the filaments of said at least one multifilament textile yarn.

Preferably, said at least one monofilament textile wire has a diameter greater than 0.15 mm, more preferably greater than 0.20 mm.

Preferably, said at least one monofilament textile wire has a diameter lower than 0.50 mm, more preferably lower than 0.40 mm.

In preferred embodiments, said at least one monofilament textile wire has a diameter comprised between 0.15 mm and 0.50 mm, preferably between 0.20 mm and 0.40 mm, for example equal to 0.30 mm.

The Applicant has found that the use of monofilament textile wires having the aforementioned diameter values contributes to optimally satisfy the requirement of providing the carcass structure with both the desired structural integrity/rigidity and the desired resistance to fatigue.

In general, preferably, the more monofilament textile wires are contained in each strand of the hybrid reinforcing cord the smaller the diameter of said monofilament textile wires will be.

Preferably, said at least one multifilament textile yarn has a linear density greater than 840 dtex, more preferably greater than 940 dtex.

Preferably, said at least one multifilament textile yarn has a linear density lower than 2100 dtex, more preferably lower than 1840 dtex.

In preferred embodiments, said at least one multifilament textile yarn has a linear density comprised between 840 dtex and 2100 dtex, preferably between 940 dtex and 1840 dtex, for example equal to 1100 dtex.

The Applicant has observed that the use of multifilament textile yarns having the aforementioned linear density values contributes to optimally satisfy the requirement of providing the hybrid reinforcing cords used in the carcass structure with both the desired breaking load and the desired part load elongation.

Preferably, said at least one carcass ply has a thread count greater than 70 cords/dm, more preferably greater than 75 cords/dm.

Preferably, said at least one carcass ply has a thread count lower than, or equal to, 95 cords/dm, more preferably lower than, or equal to, 90 cords/dm.

In preferred embodiments, said at least one carcass ply has a thread count comprised between 70 cords/dm and 95 cords/dm, preferably between 75 cords/dm and 90 cords/dm, for example equal to 85 cords/dm.

The Applicant has observed that the provision of the aforementioned thread count values contributes to optimally satisfy the requirement of increasing as much as possible the number of hybrid reinforcing cords provided in the carcass ply compatibly with the need to still provide a distance between adjacent hybrid reinforcing cords such as to ensure the presence of an amount of elastomeric material sufficient to ensure the desired mechanical behaviour of the carcass structure. The Applicant believes that such a distance must preferably have an extension not lower than 0.10 mm, more preferably not lower than 0.15 mm, for example equal to 0.20 mm.

Preferably, said at least one carcass ply has a thickness greater than 0.7 mm, more preferably greater than 0.9 mm.

Preferably, said at least one carcass ply has a thickness lower than 1.5 mm, more preferably lower than 1.3 mm.

In preferred embodiments, said at least one carcass ply has a thickness comprised between 0.7 mm and 1.5 mm, preferably between 0.9 mm and 1.3 mm, for example equal to 1.1 mm.

The Applicant has observed that the provision of the aforementioned thickness values contributes to optimally satisfy the need of providing, in a radially outer position and in a radially inner position with respect to the hybrid reinforcing cords of the carcass ply, a layer of elastomeric material sufficient to ensure the desired mechanical behaviour and the desired geometry of the carcass structure. The Applicant believes that such a layer must preferably have a thickness not lower than 0.10 mm, more preferably not lower than 0.15 mm, for example equal to 0.20 mm.

In some preferred embodiments, the carcass structure comprises a single carcass ply (mono-ply tyre). In this way, an advantageous reduction of the weight of the carcass structure (and therefore of the tyre) and, consequently, a considerable reduction of the rolling resistance of the tyre, is obtained.

In other preferred embodiments, the carcass structure comprises at least two carcass plies juxtaposed with respect to one another, preferably only two carcass plies (two-ply tyre).

In this case, the reinforcing cords of a first carcass ply can be substantially parallel to those of the other carcass ply or inclined with respect to those of the other carcass ply by an angle lower than 40°, preferably lower than 35°.

In some preferred embodiments, each hybrid reinforcing cord comprises only two strands.

Preferably, each of said two strands comprises a single monofilament textile wire.

Preferably, each of said two strands comprises a single multifilament textile yarn.

In this case, preferably, in any cross section of the hybrid reinforcing cord, at least 50% of the outer surface of each monofilament textile wire is arranged between, or embedded in, the filaments of the respective multifilament textile yarn. In this way, the probability of having a portion of the outer surface of the monofilament textile wire directly exposed to the elastomeric material is extremely low.

Preferably, the hybrid reinforcing cord comprises at least one portion at which, in any cross section of the hybrid reinforcing cord, each monofilament textile wire is completely embedded in the filaments of the respective multifilament textile yarn.

In other preferred embodiments, each strand comprises more than one monofilament textile wire and more than one multifilament textile yarn.

Such a reinforcing cord is particularly suitable for being used in the carcass structures of self-supporting tyres since it is sufficiently rigid to allow a deflated tyre to travel a long distance (up to 100 km).

Preferably, each of said two strands comprises at least two ends twisted together, more preferably only two ends.

Preferably, each of said at least two ends comprises, in any cross section of the hybrid reinforcing cord, at least one monofilament textile wire.

Preferably, in any cross section of the hybrid reinforcing cord said at least one monofilament textile wire is at least partially embedded in the filaments of at least one multifilament textile yarn.

Preferably, each of said at least two ends comprises a single monofilament textile wire.

Preferably, each of said at least two ends comprises a single multifilament textile yarn.

In further preferred embodiments, each strand comprises more than one monofilament textile wire (for example two monofilament textile wires) and a single multifilament textile yarn.

In further embodiments, each strand comprises a single monofilament textile wire and more than one multifilament textile yarn (for example two multifilament textile yarns).

In further embodiments, each strand comprises more than one monofilament textile wire (for example two monofilament textile wires) and more than one multifilament textile yarn (for example two multifilament textile yarns).

In all of the embodiments discussed above, the polyester fibres of the monofilament textile wire are selected among polybutylene terephthalate fibres, polyethylene terephthalate fibres, polyethylene isophthalate fibres, or mixtures thereof.

More preferably, the aforementioned polyester fibres are polyethylene terephthalate (PET) fibres.

In all of the embodiments discussed above, preferably, the filaments of said at least one multifilament textile yarn are made of aramid fibres or polyester fibres (for example polybutylene terephthalate fibres, polyethylene terephthalate fibres, polyethylene isophthalate fibres) or mixtures thereof.

More preferably, in the case in which the multifilament textile yarn comprises polyester fibres they are polyethylene terephthalate (PET) fibres.

In all of the embodiments, preferably, the twisting pitch is greater than 1 mm, more preferably greater than 2 mm.

Preferably, the twisting pitch is lower than 20 mm, more preferably lower than 15 mm.

In preferred embodiments, the twisting pitch is comprised between 1 mm and 20 mm, more preferably between 2 mm and 15 mm.

Said at least one monofilament textile wire can be twisted on itself with a predetermined first twisting pitch. The Applicant has observed that such a provision contributes to optimize the behaviour under fatigue of the reinforcing cord.

Preferably, said first twisting pitch is equal to said predetermined twisting pitch. In this way, the embedding of the monofilament textile wires in the filaments of the respective multifilament textile yarns is maximized, to the benefit of the adhesion of the reinforcing cord with the surrounding elastomeric material.

Said at least one multifilament textile yarn may or may not be twisted on itself with a predetermined second twisting pitch. When twisted on itself, preferably, the second twisting pitch is equal to said twisting pitch. This is made in order to maximize the embedding of the monofilament textile wires in the filaments of the multifilament textile yarns.

In some preferred embodiments, said at least one multifilament textile yarn is substantially parallel to said at least one monofilament textile wire.

In other preferred embodiments, the filaments of said at least one multifilament textile yarn embed the monofilament textile wire winding in a helix onto the latter with a predetermined winding pitch.

Again in order to maximize the embedding of the monofilament textile wires in the filaments of the multifilament textile yarns, preferably, said winding pitch is equal to said twisting pitch.

Preferably, the filaments of said at least one multifilament textile yarn are coated with an adhesive substance, or subjected to a chemical or physical adhesion treatment, in order to further improve the adhesion with the elastomeric material in which they are embedded or with which they are coated.

Preferably, the tyre of the invention carries one of the following speed codes: "T", "U", "H", "V", "Z","W", "Y", according to the E.T.R.T.O. standard.

Preferably, the tyre of the invention is a self-supporting tyre.

### DESCRIPTION OF EMBODIMENTS OF THE INVENTION

Further features and advantages of the tyre of the present invention will become clearer from the following detailed description of preferred embodiments thereof, made with reference to the attached drawings. In such drawings:
- figure 1 is a schematic partial half-cross section view of a portion of a tyre according to an embodiment of the present invention;
- figure 2 is a schematic side view of a segment of a first embodiment of a hybrid reinforcing cord used in the carcass structure of the tyre of figure 1;
- figure 3 is an enlarged schematic view of a cross section of the hybrid reinforcing cord of figure 2 incorporated in a portion of the carcass structure of the tyre of figure 1, such a cross section being taken on the section plane S-S drawn in figure 2;
- figure 4 is a schematic perspective view of the hybrid reinforcing cord of figure 2 in which part of its components have been removed to show components that otherwise would be hidden;
- figure 5 is a schematic perspective view of a second embodiment of the hybrid reinforcing cord of figure 2 in which part of its components have been removed to show components that otherwise would be hidden;
- figure 6 is an enlarged schematic view of a cross section of a further embodiment of a hybrid reinforcing cord which can used in the carcass structure of the tyre of figure 1.

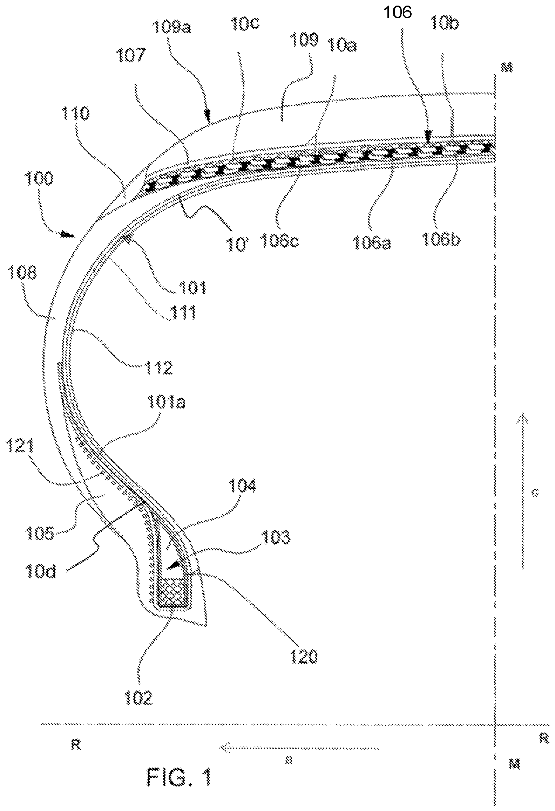

For the sake of simplicity, figure 1 shows only a part of an exemplary embodiment of a tyre 100 in accordance with the present invention, the remaining part, which is not shown, being substantially identical and being arranged symmetrically with respect to the equatorial plane M-M of the tyre.

The tyre 100 shown in figure 1 is, in particular, an exemplary embodiment of a tyre for four-wheeled vehicles.

Preferably, the tyre 100 is a HP or UHP tyre for high or ultra-high-performance sports automobiles, both electric and non-electric.

In particular, the tyre 100 carries one of the following speed codes: "T", "U", "H", "V", "Z","W", "Y", according to the E.T.R.T.O. standard.

In figure 1 "a" indicates an axial direction, "c" indicates a radial direction, "M-M" indicates the equatorial plane of the tyre 100 and "R-R" indicates the rotation axis of the tyre 100.

The tyre 100 comprises a carcass structure 101 of the radial type, which in turn comprises at least one carcass ply 111.

Hereinafter, for the sake of simplicity of presentation, reference will be made to an embodiment of the tyre 100 comprising a single carcass ply 111 (mono-ply tyre). However, it is understood that what is described with respect to the carcass ply 111 also applies to each carcass ply of tyres comprising more than one carcass ply, except when indicated otherwise. Indeed, there are embodiments of the tyre 100 of the invention in which the carcass structure 101 comprises for example two carcass plies 111 (two-ply tyre).

The carcass ply 111 comprises a plurality of reinforcing cords 10' coated with, or embedded in, a layer of cross-linked elastomeric material. In the case in which the tyre 100 is of the two-ply type, the reinforcing cords of a first carcass ply can be substantially parallel to those of the other carcass ply or inclined with respect to those of the other carcass ply by an angle lower than 40°.

The carcass ply 111 preferably has a thread count greater than 70 cords/dm and lower than, or equal to, 95 cords/dm, more preferably comprised between 75 cords/dm and 90 cords/dm. For example, in a preferred embodiment of the tyre 100 of the invention, the aforementioned thread count is equal to 85 cords/dm.

The carcass ply 111 preferably has a thickness comprised between 0.7 mm and 1.5 mm, more preferably between 0.9 mm and 1.3 mm. For example, in the aforementioned preferred embodiment of the tyre 100 of the invention, the aforementioned thickness is equal to 1.1 mm.

The carcass ply 111 has axially opposite end edges engaged with respective annular anchoring structures 102, called bead cores, possibly associated with an elastomeric filler 104. The area of the tyre 100 comprising the bead core 102 and the possible elastomeric filler 104 forms an annular reinforcing structure 103 which is called "bead structure" and which is intended to allow the tyre 100 to be anchored on a corresponding mounting rim, not shown.

Each annular reinforcing structure 103 is associated with the carcass structure 101 by folding back (or turning) the opposite end edges of the at least one carcass ply 111 around the bead core 102 and the possible elastomeric filler 104, so as to form the so-called turns 101a of the carcass structure 101.

In an embodiment, the coupling between carcass structure 101 and annular reinforcing structure 103 can be made through a layer (not shown in figure 1) applied in a radially outer position with respect to the carcass ply 111.

An anti-abrasion strip 105 is arranged at each annular reinforcing structure 103 so as to wrap around the annular reinforcing structure 103 along the axially inner, axially outer and radially inner areas of the annular reinforcing structure 103, thus being placed between the latter and the rim of the wheel when the tyre 100 is mounted on the rim. Such an anti-abrasion strip 105 may however not be provided.

The tyre 100 comprises, in a radially outer position with respect to the carcass structure 101, a crossed belt structure 106 comprising at least two belt layers 106a, 106b arranged radial juxtaposed with respect to one another.

The belt layers 106a, 106b respectively comprise a plurality of reinforcing cords 10a, 10b. Such reinforcing cords 10a, 10b have an orientation which is inclined with respect to the circumferential direction of the tyre 100, or to the equatorial plane M-M of the tyre 100, by an angle comprised between 15° and 45°, preferably between 20° and 40°. For example, such an angle is equal to 30°.

The tyre 100 can also comprise a further belt layer (not shown) arranged between the carcass structure 101 and the radially innermost belt layer of the aforementioned belt layers 106a, 106b and comprising a plurality of reinforcing cords having an orientation which is inclined with respect to the circumferential direction of the tyre 100, or to the equatorial plane M-M of the tyre 100, by an angle equal to 90°.

The tyre 100 can also comprise a further belt layer (not shown) arranged in a radially outer position with respect to the radially outermost belt layer of the aforementioned belt layers 106a, 106b and comprising a plurality of reinforcing cords having an orientation inclined with respect to the circumferential direction of the tyre 100, or to the equatorial plane M-M of the tyre 100, by an angle comprised between 20° and 70°.

The reinforcing cords 10a, 10b of a belt layer 106a, 106b are parallel to one another and have a crossed orientation with respect to the reinforcing cords of the other belt layer 106b, 106a.

In ultra-high-performance tyres, the belt structure 106 can be a turned crossed belt structure. Such a belt structure is made by arranging at least one belt layer on a support element and turning the opposite lateral end edges of said at least one belt layer. Preferably, at first a first belt layer is deposited on the support element, then the support element is radially expanded, then a second belt layer is deposited on the first belt layer and finally the opposite axial end edges of the first belt layer are turned onto the second belt layer to at least partially cover the second belt layer, which is the radially outermost one. In some cases, it is possible to arrange a third belt layer on the second belt layer. Advantageously, the turning of the axially opposite end edges of a belt layer on another belt layer arranged in a radially outer position with respect to the first one provides the tyre with a greater reactivity and responsiveness when tackling a bend.

The tyre 100 comprises, in a radially outer position with respect to the crossed belt structure 106, at least one zero degrees reinforcing layer 106c, commonly known as "zero degrees belt". It comprises reinforcing cords 10c oriented in a substantially circumferential direction. Such reinforcing cords 10c thus form an angle of a few degrees (typically lower than 10°, for example comprised between 0° and 6°) with respect to the equatorial plane M-M of the tyre 100.

The reinforcing cords 10a, 10b, 10c are coated with an elastomeric material or embedded in a matrix of cross-linked elastomeric material.

A tread band 109 made of elastomeric material is applied in a radially outer position with respect to the zero degrees reinforcing layer 106c.

Respective sidewalls 108 made of elastomeric material are also applied on the lateral surfaces of the carcass structure 101, in an axially outer position with respect to the carcass structure 101 itself. Each sidewall 108 extends from one of the lateral edges of the tread band 109 up to the respective annular reinforcing structure 103.

The anti-abrasion strip 105, if provided, extends at least up to the respective sidewall 108.

In some specific embodiments, like the one herein shown and described, the rigidity and integrity of the annular reinforcing structure 103 and of the sidewall 108 can be improved by providing a stiffening layer 120, generally known as "flipper" or additional strip-like insert.

The flipper 120 is wound around a respective bead core 102 and the elastomeric filler 104 so as to at least partially surround the annular reinforcing structure 103. In particular, the flipper 120 wraps around the annular reinforcing structure 103 along the axially inner, axially outer and radially inner areas of the annular reinforcing structure 103.

The flipper 120 is arranged between the turned end edge of the carcass ply 111 and the respective annular reinforcing structure 103. Usually, the flipper 120 is in contact with the carcass ply 111 and the annular reinforcing structure 103.

In some specific embodiments, like the one shown and described here, the annular reinforcing structure 103 can also comprise a further stiffening layer 121 that is generally known by the name "chafer", or protective strip, and which has the function of increasing the rigidity and integrity of the annular reinforcing structure 103.

The chafer 121 is associated with a respective turned end edge of the carcass ply 111 in an axially outer position with respect to the respective annular reinforcing structure 103 and extends radially towards the sidewall 108 and the tread band 109.

The flipper 120 and the chafer 121 comprise reinforcing cords 10d (in the attached figures those of the flipper 120 are not visible) coated with an elastomeric material or embedded in a matrix of cross-linked elastomeric material.

The tread band 109 has, in a radially outer position thereof, a rolling surface 109a intended to come into contact with the ground. Circumferential grooves (not shown in figure 1) are formed on the rolling surface 109a,such grooves being connected by transversal notches (not shown in figure 1) so as to define on the rolling surface 109a a plurality of blocks of various shapes and sizes (not shown in figure 1).

A sub-layer 107 is arranged between the crossed belt structure 106 and the tread band 109.

In some specific embodiments, like the one shown and described herein, a strip 110 consisting of elastomeric material, commonly known as "mini-sidewall", can possibly be provided in the connection area between the sidewall 108 and the tread band 109. The mini-sidewall 110 is generally obtained through co-extrusion with the tread band 109 and it allows an improvement of the mechanical interaction between the tread band 109 and the sidewalls 108.

Preferably, an end portion of the sidewall 108 directly covers the lateral edge of the tread band 109.

In the case of tubeless tyres, like the one herein shown and described, a layer of rubber 112, generally known as "liner", can also be provided in a radially inner position with respect to the carcass ply 111 to supply the necessary air tightness to the inflation air of the tyre 100.

In the case of self-supporting tyres, a reinforcing insert made of elastomeric material (not shown) is arranged in an axially outer position with respect to the liner 112 and in an axially inner position with respect to the sidewall 108, the reinforcing insert being configured to prevent the yielding or the swelling of the sidewall 108 when the tyre is deflated.

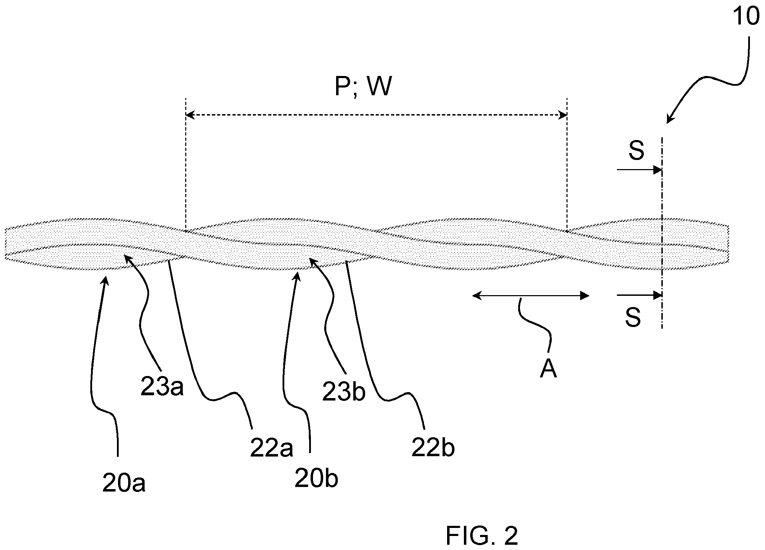

At least some of the reinforcing cords 10' of the carcass structure 101 (preferably all of the reinforcing cords 10') are hybrid reinforcing cords 10 of the type shown in figures 2-6 and described below.

The reinforcing cords 10a, 10b, 10c and 10d can also be hybrid reinforcing cords 10 of the type shown in figures 2-6 or reinforcing cords of a different type.

With reference to figures 2-4, the hybrid reinforcing cord 10 comprises two strands 20a, 20b twisted together with a predetermined twisting pitch P.

Preferably, the two strands 20a, 20b are identical.

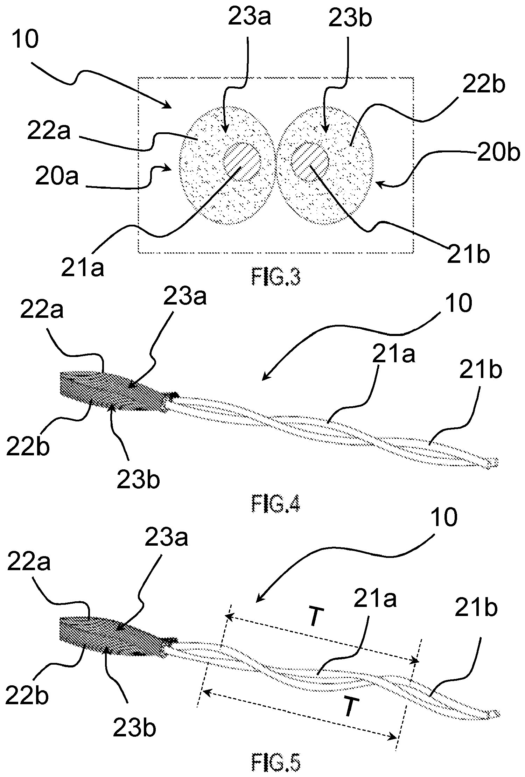

As shown in figures 3 and 4, each strand 20a, 20b comprises a single monofilament textile wire 21a, 21b and a single multifilament textile yarn 22a, 22b defined by a plurality of filaments 23a, 23b. Each strand 20a, 20b could however comprise more than one monofilament textile wire and more than one multifilament textile yarn.

In any cross section of the reinforcing cord 10, the monofilament textile wire 21a, 21b is embedded in the filaments 23a, 23b of the multifilament textile yarn 22a, 22b of the respective strand 20a, 20b.

In the embodiment shown in figures 3 and 4, the monofilament textile wire 21a, 21b is, in any cross section of the reinforcing cord 10, completely embedded in the filaments 23a, 23b of the multifilament textile yarn 22a, 22b of the respective strand 20a, 20b and, therefore, the aforementioned filaments 23a, 23b are arranged around the respective monofilament textile wire 21a, 21b so as to completely surround the monofilament textile wire 21a, 21b.

Therefore, in figure 2, the monofilament textile wires 21a, 21b are not visible since they are entirely covered by the filaments 23a, 23b of the multifilament textile yarn 22a, 22b of the respective strand 20a, 20b.

Although the embodiment of figures 2-4 (and also that of figure 5, as discussed below) wherein the monofilament textile wire 21a, 21b is, in any cross section of the reinforcing cord 10, completely embedded in the filaments 23a, 23b of the multifilament textile yarn 22a, 22b of the respective strand 20a, 20b is particularly preferred, other embodiments are deemed equally preferred wherein, in any cross section of the reinforcing cord 10, the monofilament textile wire 21a, 21b is only partially embedded in the filaments 23a, 23b of the multifilament textile yarn 22a, 22b of the respective strand 20a, 20b, and in particular wherein at least 50% of the outer surface of the monofilament textile wire 21a, 21b is embedded in the filaments 23a, 23b of the multifilament textile yarn 22a, 22b of the respective strand 20a, 20b.

The monofilament textile wires 21a, 21b extend along a longitudinal direction A, shown in figure 2.

The mutual arrangement of the monofilament textile wires 21a, 21b and of the filaments 23a, 23b of the multifilament textile yarn 22a, 22b along the longitudinal direction A can be such that the monofilament textile wires 21a, 21b extend substantially parallel to the filaments 23a, 23b of the multifilament textile yarn 22a, 22b of the respective strand 20a, 20b, as shown in figure 4, or such that the filaments 23a, 23b of the multifilament textile yarn 22a, 22b are wound in a helix on the respective monofilament textile wire 21a, 21b with a predetermined winding pitch W which, preferably, is equal to the twisting pitch P.

In this last case, the twisting direction of the two strands 20a, 20b is preferably the same as the winding direction of the filaments 23a, 23b of the multifilament textile yarn 22a, 22b on the monofilament textile wire 21a, 21b, but it is possible to have opposite directions.

The twisting pitch P is preferably comprised between 1 mm and 20 mm, more preferably between 2 mm and 15 mm, for example equal to 12.5 mm.

Figure 5 shows an embodiment of a hybrid reinforcing cord 10 that differs from the one shown in figures 2-4 only in that the monofilament textile wires 21a, 21b are twisted on themselves with a predetermined twisting pitch T.

Preferably, the twisting pitch T is equal to the twisting pitch P.

The twisting direction of the monofilament textile wires 21a, 21b can be the same as or opposite to the twisting direction of the two strands 20a, 20b.

The monofilament textile wires 21a, 21b are made of polyester fibres, for example polybutylene terephthalate (PBT), polyethylene terephthalate (PET), polyethylene isophthalate (PEI), or mixtures thereof.

The filaments 23a, 23b of each multifilament textile yarn 22a, 22b are made of aramid fibres or polyester fibres, for example polybutylene terephthalate (PBT), polyethylene terephthalate (PET), polyethylene isophthalate (PEI), or rayon fibres, or any mixture of the aforementioned fibres.

Irrespective of the specific type of textile material used for the filaments 23a, 23b of the multifilament textile yarns 22a, 22b, such a material is suitably made adhesive on the surface so as to offer an adequate adhesivity to the surrounding elastomeric material. Typically, the adhesive treatment can be carried out through coating with an adhesive substance or through a chemical or physical treatment.

For example, the adhesive treatment is carried out through immersion of the hybrid reinforcing cord 10 in a solution comprising the adhesive substance after having twisted together the two strands 20a, 20b.

The monofilament textile wires 21a, 21b preferably have a diameter comprised between 0.15 mm and 0.50 mm, more preferably between 0.20 mm and 0.40 mm. For example, in a preferred embodiment of the carcass structure 101 of the tyre 100 the aforementioned diameter is equal to 0.30 mm.

The multifilament textile yarns 22a, 22b preferably have a linear density comprised between 840 dtex and 2100 dtex, preferably between 940 dtex and 1840 dtex. For example, in a preferred embodiment of the carcass structure 101 of the tyre 100 the aforementioned linear density is equal to 1100 dtex.

In a preferred embodiment of the hybrid reinforcing cord 10 shown in figures 2-5 and used in the aforementioned preferred embodiment of the carcass structure 101 of the tyre 100, the hybrid reinforcing cord 10 has two strands 20a, 20b twisted together. In each strand 20a, 20b, the monofilament textile wires 21a, 21b are made of PET fibres and have a diameter equal to 0.30 mm, whereas the multifilament textile yarns 22a, 22b are made of aramid and have a linear density equal to 1110 dtex. In such a hybrid reinforcing cord 10, for example, 310 twists have been imparted in the right-handed direction (Z) to the multifilament textile yarn 22a, 22b and to the monofilament textile wire 21a, 21b of each of the two strands 20a, 20b, whereas 180 twists have been imparted in the left-handed direction (S) to each of the two strands 20a, 20b. Such a reinforcing cord can therefore be indicated with (PET0.30+AR1100)x2 310Z/180S.

Another preferred embodiment of the hybrid reinforcing cord 10 shown in figures 2-5 differs from the one described above only in that the multifilament textile yarns 22a, 22b are made of rayon and have a linear density equal to 1840 dtex. In such a hybrid reinforcing cord 10, for example, 300 or 310 twists have been imparted in the right-handed direction (Z) to the multifilament textile yarn 22a, 22b and to the monofilament textile wire 21a, 21b of each of the two strands 20a, 20b, whereas 180 twists have been imparted in the left-handed direction (S) to each of the two strands 20a, 20b. Such reinforcing cords can therefore be indicated with (PET0.30+RY1840)x2 300Z/180S and (PET0.30+RY1840)x2 310Z/180S, respectively.

Another preferred embodiment of the hybrid reinforcing cord 10 shown in figures 2-5 differs from the one described above only in that the multifilament textile yarns 22a, 22b made of rayon have a linear density equal to 1220 dtex. In such a hybrid reinforcing cord 10, for example, 300 twists have been imparted in the right-handed direction (Z) to the multifilament textile yarn 22a, 22b and to the monofilament textile wire 21a, 21b of each of the two strands 20, 20b, whereas 150 twists have been imparted in the left-handed direction (S) to each of the two strands 20a, 20b. Such a reinforcing cord can therefore be indicated with (PET0.30+RY1220)x2 300Z/150S.

In another preferred embodiment of the hybrid reinforcing cord 10 shown in figures 2-5, the two strands 20a, 20b are not identical. For example, while in both the strands 20a, 20b the monofilament textile wires 21a, 21b are made of PET fibres and have a diameter equal to 0.30 mm, the multifilament textile yarn 22a of a strand 20a is made of rayon and has a linear density equal to 1220 dtex and the multifilament textile yarn 22b of the other strand 20b is made of rayon and has a linear density equal to 1840 dtex. In such a hybrid reinforcing cord 10, for example, 300 twists have been imparted in the right-handed direction (Z) to the multifilament textile yarn 22a, 22b and to the monofilament textile wire 21a, 21b of each of the two strands 20a and 20b, whereas 150 twists have been imparted in the left-handed direction (S) to each of the two strands 20a, 20b. Such a reinforcing cord can therefore be indicated with (PET0.30+RY1220) + (PET0.30+RY1840) 300Z/150S.

The Applicant has also made hybrid reinforcing cords in accordance with the present invention by twisting together three strands. For example, in an embodiment of such a type of hybrid reinforcing cord each strand comprises a monofilament textile wire made of PET fibres and having a diameter equal to 0.30 mm and a multifilament textile yarn made of rayon and having a linear density equal, for example, to 1220 dtex. In such hybrid reinforcing cords, for example, 300 twists have been imparted in the right-handed direction (Z) to the multifilament textile yarn and to the monofilament textile wire of each of the three strands, whereas 150 twists have been imparted in the left-handed direction (S) to each of the three strands. Such a reinforcing cord can therefore be indicated with (PET0.30+RY1220)x3 300Z/150S.

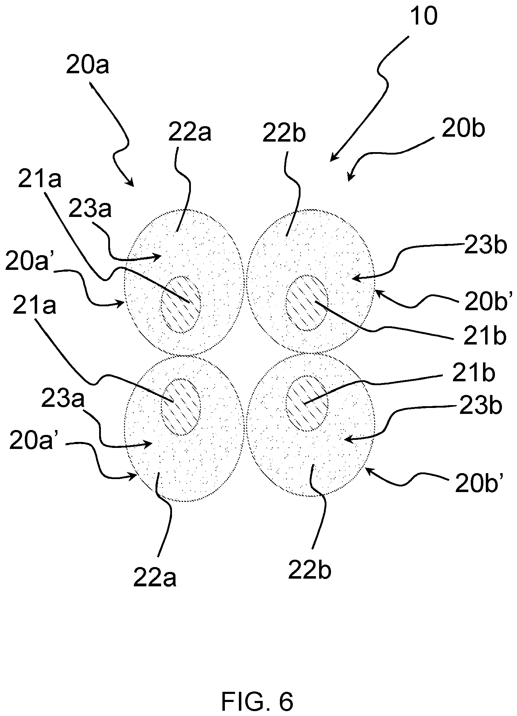

Figure 6 shows another preferred embodiment of a hybrid reinforcing cord 10 which can used in the carcass structure 101 of tyres 100 in accordance with the present invention, preferably of the self-supporting type.

The hybrid reinforcing cord 10 of figure 6 differs from the one shown in figures 2-4 only in that the strand 20a comprises two monofilament textile wires 21a of the type described above and two multifilament textile yarns 22a of the type described. Similarly, the strand 20b comprises two monofilament textile wires 21b of the type described above and two multifilament textile yarns 22b of the type described above. The empty space at the centre of the hybrid reinforcing cord 10 shown in figure 6 in reality will be occupied by the filaments 23a and 23b of the multifilament textile yarns 22a, 22b.

The strand 20a comprises two ends 20a' twisted together with a twisting pitch that can be the same as, or different from, the twisting pitch of the two strands 20a, 20b. Similarly, the strand 20b comprises two ends 20b' twisted together with a twisting pitch that can be the same as, or different from, the twisting pitch of the two ends 20a'.

Each of the two ends 20a' of the strand 20a comprises a monofilament textile wire 21a at least partially embedded in the filaments 23a of a multifilament textile yarn 22a. Similarly, each of the two ends 20b' of the strand 20b comprises a monofilament textile wire 21b at least partially embedded in the filaments 23b of a multifilament textile yarn 22b.

In a preferred embodiment of the hybrid reinforcing cord 10 shown in figure 6, the monofilament textile wires 21a, 21b are made of PET fibres and have a diameter equal to 0.30 mm, whereas the multifilament textile yarns 22a, 22b are made of aramid and have a linear density equal to 1110 dtex. In such a hybrid reinforcing cord 10, for example, 310 twists have been imparted in the right-handed direction (Z) to the ends 20a', 20b' of each strand 20a and 20b, whereas 280 twists have been imparted in the left-handed direction (S) to each of the two strands 20a, 20b. The reinforcing cord can therefore be indicated with 2x2(PET0.30+AR1100) 310Z/280S.

### COMPARATIVE TESTS

The Applicant has carried out various comparative tests adapted to compare the behaviour of tyres made in accordance with the present invention with that of reference tyres successfully produced and commercialized by the Applicant.

### Self-supporting tyres

In a first series of tests aimed to evaluate the suitability of the tyre of the present invention for being used as self-supporting tyre and to satisfy the continuous need of reducing emissions of CO₂ into the atmosphere (hereinafter indicated as "environmental need"), the Applicant compared a reference self-supporting tyre of the type 245/45R18 100Y XL, commercialized with the trademark Cinturato P7^{™} RUNFLAT and having a carcass structure including reinforcing cords made of rayon and, in the sidewalls, reinforcing inserts made of elastomeric material with a high modulus having a thickness equal to 7 mm (hereinafter such a tyre is indicated with P1), with the following two tyres:
- a tyre that differs from the tyre P1 solely in that it has, in the sidewalls, reinforcing inserts made of elastomeric material having a lower thickness, equal to 6 mm (hereinafter such a tyre is indicated with P2);
- a tyre made in accordance with the present invention and that differs from the tyre P1 solely in that it has, in its carcass structure, hybrid reinforcing cords as defined above and, in the sidewalls, reinforcing inserts made of elastomeric material having a low modulus, and thus with a low hysteresis, and a thickness equal to 8 mm (hereinafter such a tyre is indicated with INV).

The reinforcing cords of the carcass structure of the tyres P1 and P2 were of the type RY1840x2 (48Zx48S), i.e. each of them comprising two multifilament textile yarns made of rayon twisted together, in which 48 twists have been imparted in the right-handed direction (Z) to each multifilament textile yarn and 48 twists have been imparted in the left-handed direction (S) to the reinforcing cord. Such reinforcing cords were arranged in the carcass structure with a thread count equal to 120 cords/dm.

The hybrid reinforcing cords of the carcass structure of the tyre INV were of the following type: (PET0.30+AR1680)x2 310Z/180S, i.e. each of them comprising two strands, each strand comprising two monofilament textile wires made of PET having a diameter equal to 0.30 mm and a multifilament textile yarn made of aramid having a linear density equal to 1680 dtex. The two strands were twisted together by imparting 310 twists in the right-handed direction (Z), whereas each multifilament textile yarn was twisted to the respective monofilament textile wire by imparting 180 twists in the left-handed direction (S). Such hybrid reinforcing cords were arranged in the carcass structure with a thread count equal to 85 cords/dm.

The Applicant measured the rolling resistance of the tyres P1, P2 and INV in accordance with EU Regulation no. 1235/2011 and obtained the values given in Table 1 below.

**Table 1**

| P1 | P2 | INV |
|---|---|---|
| 6.3 | 6.1 | 6.1 |

The Applicant has therefore verified that the tyres P2 and INV satisfy the aforementioned environmental need. The good behaviour of the tyre P2 was expected by virtue of the reduction of thickness of the reinforcing insert made of elastomeric material, whereas the good behaviour of the tyre INV confirms the intuition of the Applicant that it is possible to reduce the rolling resistance of a tyre by increasing the rigidity of its carcass structure and reducing the hysteresis.

With the aim to evaluate the suitability of the tyres P2 and INV for being used as self-supporting tyres, the Applicant carried out an outdoor test on a circuit by mounting the tyres P1, P2 and INV on the left rear wheel of a BMW series 5 and applying a vertical load of 570 Kg on the aforementioned wheel.

The Applicant verified that, while the tyre P2 allowed to travel for a few km with the tyre deflated, much less than with the tyre P1 and such as not to allow use of the tyre P2 as self-supporting tyre, the tyre INV allowed to travel with the tyre deflated a distance that is absolutely comparable with that of the tyre P1.

Such tests therefore confirmed the suitability of the tyre of the present invention both for being used as self-supporting tyre and for satisfying the need of reducing emissions of CO₂ into the atmosphere.

### Standard tyres

In a second series of tests, carried out on standard tyres, i.e. not self-supporting, and aimed to evaluate the performance of the tyre of the present invention, the Applicant compared a reference tyre of the type 215/45 R17 91Y XL, commercialized with the trademark Cinturato P7^{™} and having a carcass structure including reinforcing cords made of rayon and a rigid tread band (hereinafter such a tyre is indicated with P1*), with a tyre made in accordance with the present invention (hereinafter such a tyre is indicated with INV*). The latter differs from the tyre P1* only in that it has, in its carcass structure, hybrid reinforcing cords as defined above and a tread band less rigid than that of the tyre P1*.

The reinforcing cords of the carcass structure of the tyre P1* were identical to those described above with reference to the tyres P1 and P2. Such reinforcing cords were arranged in the carcass structure with a thread count equal to 120 cords/dm

The hybrid reinforcing cords of the carcass structure of the tyre INV* were identical to those described above with reference to the tyre INV. Such hybrid reinforcing cords were arranged in the carcass structure with a thread count equal to 85 cords/dm.

The reference tyre is a tyre appreciated by customers for its excellent behaviour on dry and wet road surfaces in terms of drivability and braking.

The choice of providing in the tyre of the invention a tread band less rigid than that of the reference tyre was made to compensate for the greater rigidity of the carcass structure of the tyre of the invention with respect to that of the carcass structure of the reference tyre. The Applicant indeed wanted to carry out comparative tests based on the same vertical rigidity.

The tyres P1* and INV* were mounted on a Mini Cooper S, the front tyres being inflated to 2.6 bar and the rear tyres being inflated to 2.2 bar, and subjected to the judgement of a test driver who carried out a series of laps of a circuit.

The judgement provided by the test driver is given in Table 2 below, where the symbol "=" indicates an excellent judgement and the symbol "+" indicates an improvement with respect to the reference tyres.

**Table 2**

| | P1* | INV* |
|---|---|---|
| Straight-line travel on uneven surface | = | + |
| Straight-line travel on regular surface | = | + |
| Response to steering | = | + |
| Steering torque | = | + |
| Required steering angle | = | + |
| Change of direction | = | + |
| Comfort | = | = |
| Rolling noise | = | = |
| Insertion (Turn-in) | = | + |
| Understeering | = | + |
| Oversteering | = | + |
| Throttle Release | = | + |
| Progressivity in the loss of grip (Breakaway) | = | + |
| Recovery | = | + |
| Controllability | = | + |
| Lateral Grip | = | + |

Table 2 shows how the tyre of the invention offered improved results with respect to the already excellent results of the reference tyre in all performance categories, without having any worsening in the other categories.

Some data detected during circuit laps carried out with tyres P1* and INV* and with reference tyres are given in Table 3 below, wherein also in this case the symbol "=" indicates a value, considered excellent, obtained with the reference tyres and the symbol "+" indicates an improvement with respect to the reference tyres.

**Table 3**

| | **P1*** | **INV*** |
|---|---|---|
| Braking in the dry at 100 kph [m] | = | + |
| Braking in the wet at 80 kph [m] | = | + |
| Lap time in the wet [min/s] | = | + |

The data of table 3 show an excellent behaviour of the tyre of the invention in terms of braking on a dry road surface, braking on a wet road surface and time taken to complete a lap of the circuit on a wet road surface. The excellent behaviour during braking is a consequence of the possibility of using in the tyres of the invention tread bands that are less rigid than those of the reference tyres. This is thanks to the greater rigidity of the carcass structure of the tyres of the invention with respect to that of the carcass structure of the reference tyres.

The present invention has been described with reference to some preferred embodiments. Different modifications can be brought to the embodiments described above, still remaining within the scope of protection of the invention which is defined by the following claims.

## Claims

1. Tyre (100) for vehicle wheels, comprising a carcass structure (101) including at least one carcass ply (111) having a plurality of hybrid reinforcing cords (10), each hybrid reinforcing cord (10) comprising at least two strands (20a, 20b) twisted together with a predetermined twisting pitch (P), wherein each of said at least two strands (20a, 20b) comprises at least one multifilament textile yarn (22a, 22b) comprising a plurality of textile filaments (23a, 23b) made of aramid and/or polyester and/or rayon fibers;
**characterised in that** each of said at least two strands (20a, 20b) further comprises at least one monofilament textile wire (21a, 21b) made of polyester fibers and **in that**, in any cross section of the hybrid reinforcing cord (10), said at least one monofilament textile wire (21a, 21b) is at least partially embedded in the filaments (23a, 23b) of said at least one multifilament textile yarn (22a, 22b).

2. Tyre (100) according to claim 1, wherein in any cross section of at least one segment of the hybrid reinforcing cord (10), said at least one monofilament textile wire (21a, 21b) is completely embedded in the filaments (23a, 231b) of said at least one multifilament textile yarn (22a, 22b).

3. Tyre (100) according to claim 1 or 2, wherein said at least one monofilament textile wire (21a, 21b) has a diameter comprised between 0.15 mm and 0.50 mm.

4. Tyre (100) according to any one of the previous claims, wherein said at least one multifilament textile yarn (22a, 22b) has a linear density comprised between 840 dtex and 2100 dtex, wherein the linear density is the weight of the multifilament textile yarn (22a, 22b) per unit length of the multifilament textile yarn (22a, 22b).

5. Tyre (100) according to any one of the previous claims, wherein said at least one carcass ply (111) has a thread count greater than 70 cords/dm and lower than, or equal to, 95 cords/dm.

6. Tyre (100) according to any one of the previous claims, wherein said at least one carcass ply (111) has a thickness comprised between 0.7 mm and 1.5 mm.

7. Tyre (100) according to any one of the previous claims, wherein the carcass structure (101) comprises a single carcass ply (111).

8. Tyre (100) according to any one of the previous claims, wherein each hybrid reinforcing cord (10) comprises only two strands (20a, 20b).

9. Tyre (100) according to claim 8, wherein each of said two strands (20a, 20b) comprises a single monofilament textile wire (21a, 21b) and a single multifilament textile yarn (22a, 22b).

10. Tyre (100) according to any one of claims 1 to 8, wherein each of said two strands (20a, 20b) comprises at least two ends (20a', 20b') twisted together, wherein each of said at least two ends (20a', 20b') comprises, in any cross section of the hybrid reinforcing cord (10), at least one monofilament textile wire (21a, 21b) at least partially embedded in the filaments (23a, 23b) of at least one multifilament textile yarn (22a, 22b).

11. Tyre (100) according to claim 10, wherein each of said at least two ends (20a', 20b') comprises a single monofilament textile wire (21a, 21b) and a single multifilament textile yarn (22a, 22b).

12. Tyre (100) according to claim 10, wherein each of said two strands (20a, 20b) comprises only two ends (20a', 20b').

13. Tyre (100) according to any one of the previous claims, wherein the tyre (100) has one of the following speed codes: "T", "U", "H", "V", "Z","W", "Y", according to the E.T.R.T.O. standard.

14. Tyre (100) according to any one of the previous claims, wherein the tyre (100) is a self-supporting tyre which supports the load of an automobile under a total loss of pressure.

## Patentansprüche

1. Reifen (100) für Fahrzeugräder, umfassend eine Karkassenstruktur (101), die mindestens eine Karkassenlage (111) mit einer Mehrzahl von hybriden Verstärkungscords (10) aufweist, wobei jeder hybride Verstärkungscord (10) mindestens zwei Stränge (20a, 20b) umfasst, die mit einer vorbestimmten Schlaglänge (P) miteinander verdrillt sind, wobei jeder der mindestens zwei Stränge (20a, 20b) mindestens ein Multifilament-Textilgarn (22a, 22b) umfasst, das eine Mehrzahl von Textilfilamenten (23a, 23b) umfasst, die aus Aramid- und/oder Polyester- und/oder Rayonfasern hergestellt ist;
**dadurch gekennzeichnet, dass** jeder der mindestens zwei Stränge (20a, 20b) ferner mindestens einen Monofilament-Textildraht (21a, 21b) umfasst, der aus Polyesterfasern hergestellt ist, und dadurch, dass in jedem Querschnitt des hybriden Verstärkungscords (10) der mindestens eine Multifilament-Textildraht (21a, 21b) wenigstens teilweise in die Filamente (23a, 23b) des mindestens einen Multifilament-Textilgarns (22a, 22b) eingebettet ist.

2. Reifen (100) nach Anspruch 1, wobei in jedem Querschnitt mindestens eines Segments des hybriden Verstärkungscords (10) der mindestens eine Monofilament-Textildraht (21a, 21b) vollständig in die Filamente (23a, 231b) des mindestens einen Multifilament-Textilgarns (22a, 22b) eingebettet ist.

3. Reifen (100) nach Anspruch 1 oder 2, wobei der mindestens eine Monofilament-Textildraht (21a, 21b) einen Durchmesser aufweist, der zwischen 0,15 mm und 0,50 mm liegt.

4. Reifen (100) nach einem der vorhergehenden Ansprüche, wobei das mindestens eine Multifilament-Textilgarn (22a, 22b) eine lineare Dichte aufweist, die zwischen 840 dtex und 2100 dtex liegt, wobei die lineare Dichte das Gewicht des Multifilament-Textilgarns (22a, 22b) pro Einheitslänge des Multifilament-Textilgarns (22a, 22b) ist.

5. Reifen (100) nach einem der vorhergehenden Ansprüche, wobei die mindestens eine Karkassenlage (111) eine Fadenzahl aufweist, die größer als 70 Cords/dm und kleiner oder gleich 95 Cords/dm ist.

6. Reifen (100) nach einem der vorhergehenden Ansprüche, wobei die mindestens eine Karkassenlage (111) eine Dicke aufweist, der zwischen 0,7 mm und 1,5 mm liegt.

7. Reifen (100) nach einem der vorhergehenden Ansprüche, wobei die Karkassenstruktur (101) eine einzige Karkassenlage (111) umfasst.

8. Reifen (100) nach einem der vorhergehenden Ansprüche, wobei jeder hybride Verstärkungscord (10) nur zwei Stränge (20a, 20b) umfasst.

9. Reifen (100) nach Anspruch 8, wobei jeder der zwei Stränge (20a, 20b) einen einzigen Monofilament-Textildraht (21a, 21b) und ein einziges Multifilament-Textilgarn (22a, 22b) umfasst.

10. Reifen (100) nach einem der Ansprüche 1 bis 8, wobei jeder der zwei Stränge (20a, 20b) mindestens zwei Enden (20a', 20b') umfasst, die miteinander verdrillt sind, wobei jedes der mindestens zwei Enden (20a', 20b') in jedem Querschnitt des hybriden Verstärkungscords (10) mindestens einen Monofilament-Textildraht (21a, 21b) umfasst, der wenigstens teilweise in die Filamente (23a, 23b) mindestens eines Multifilament-Textilgarns (22a, 22b) eingebettet ist.

11. Reifen (100) nach Anspruch 10, wobei jedes der mindestens zwei Enden (20a', 20b') einen einzigen Monofilament-Textildraht (21a, 21b) und ein einziges Multifilament-Textilgarn (22a, 22b) umfasst.

12. Reifen (100) nach Anspruch 10, wobei jeder der zwei Stränge (20a, 20b) nur zwei Enden (20a', 20b') umfasst.

13. Reifen (100) nach einem der vorhergehenden Ansprüche, wobei der Reifen (100) einen der folgenden Geschwindigkeitscodes aufweist: "T", "U", "H", "V", "Z", "W", "Y" gemäß dem ETRTO-Standard.

14. Reifen (100) nach einem der vorhergehenden Ansprüche, wobei der Reifen (100) ein selbsttragender Reifen ist, der die Last eines Kraftfahrzeugs bei einem totalen Druckverlust trägt.

## Revendications

1. Pneu (100) pour roues de véhicule, comprenant une structure de carcasse (101) incluant au moins un pli de carcasse (111) présentant une pluralité de câblés de renforcement hybrides (10), chaque câblé de renforcement hybride (10) comprenant au moins deux brins (20a, 20b) torsadés ensemble avec un pas de torsion prédéterminé (P), dans lequel chacun desdits au moins deux brins (20a, 20b) comprend au moins un filé textile multifilament (22a, 22b) comprenant une pluralité de filaments textiles (23a, 23b) constitués de fibres d'aramide et/ou de polyester et/ou de rayonne ;
**caractérisé en ce que** chacun desdits au moins deux brins (20a, 20b) comprend en outre au moins un fil textile monofilament (21a, 21b) constitué de fibres de polyester et **en ce que**, dans toute section transversale du câblé de renforcement hybride (10), ledit au moins un fil textile monofilament (21a, 21b) est au moins partiellement incorporé dans les filaments (23a, 23b) dudit au moins un filé textile multifilament (22a, 22b).

2. Pneu (100) selon la revendication 1, dans lequel dans toute section transversale d'au moins un segment du câblé de renforcement hybride (10), ledit au moins un fil textile monofilament (21a, 21b) est complètement incorporé dans les filaments (23a, 231b) dudit au moins un filé textile multifilament (22a, 22b).

3. Pneu (100) selon la revendication 1 ou 2, dans lequel ledit au moins un fil textile monofilament (21a, 21b) présente un diamètre compris entre 0,15 mm et 0,50 mm.

4. Pneu (100) selon l'une quelconque des revendications précédentes, dans lequel ledit au moins un filé textile multifilament (22a, 22b) présente une densité linéaire comprise entre 840 dtex et 2100 dtex, dans lequel la densité linéaire est le poids du filé textile multifilament (22a, 22b) par unité de longueur du filé textile multifilament (22a, 22b).

5. Pneu (100) selon l'une quelconque des revendications précédentes, dans lequel ledit au moins un pli de carcasse (111) présente un titre supérieur à 70 câblés/dm et inférieur ou égal à 95 câblés/dm.

6. Pneu (100) selon l'une quelconque des revendications précédentes, dans lequel ledit au moins un pli de carcasse (111) présente une épaisseur comprise entre 0,7 mm et 1,5 mm.

7. Pneu (100) selon l'une quelconque des revendications précédentes, dans lequel la structure de carcasse (101) comprend un seul pli de carcasse (111).

8. Pneu (100) selon l'une quelconque des revendications précédentes, dans lequel chaque câblé de renforcement hybride (10) ne comprend que deux brins (20a, 20b).

9. Pneu (100) selon la revendication 8, dans lequel chacun desdits deux brins (20a, 20b) comprend un seul fil textile monofilament (21a, 21b) et un seul filé textile multifilament (22a, 22b).

10. Pneu (100) selon l'une quelconque des revendications 1 à 8, dans lequel chacun desdits deux brins (20a, 20b) comprend au moins deux extrémités (20a', 20b') torsadées ensemble, dans lequel chacune desdites au moins deux extrémités (20a', 20b') comprend, dans toute section transversale du câblé de renforcement hybride (10), au moins un fil textile monofilament (21a, 21b) incorporé au moins partiellement dans les filaments (23a, 23b) d'au moins un filé textile multifilament (22a, 22b).

11. Pneu (100) selon la revendication 10, dans lequel chacune desdites au moins deux extrémités (20a', 20b') comprend un seul fil textile monofilament (21a, 21b) et un seul filé textile multifilament (22a, 22b).

12. Pneu (100) selon la revendication 10, dans lequel chacun desdits deux brins (20a, 20b) ne comprend que deux extrémités (20a', 20b').

13. Pneu (100) selon l'une quelconque des revendications précédentes, dans lequel le pneu (100) présente l'un des codes de vitesse suivants : "T", "U", "H", "V", "Z", W", "Y", selon la norme E.T.R.T.O.

14. Pneu (100) selon l'une quelconque des revendications précédentes, dans lequel le pneu (100) est un pneu autoporteur qui supporte la charge d'une automobile sous une perte totale de pression.
